# FASCICULE DE BREVET EUROPEEN

(11) **EP 0 595 950 B1**
(45) Date de publication et mention de la délivrance du brevet: **05.03.1997**
(21) Numéro de dépôt: 92916074.5
(22) Date de dépôt: 21.07.1992
(51) Int. Cl.: G10L 5/06

(54) **PROCEDE ET DISPOSITIF DE RECONNAISSANCE DE LA PAROLE EN TEMPS REEL**
ECHTZEIT-SPRACHERKENNUNGSVORRICHTUNG UND VERFAHREN
REAL-TIME SPEECH RECOGNITION DEVICE AND METHOD

(30) Priorité: 23.07.1991 FR 9109275
(43) Date de publication de la demande: 11.05.1994
(73) Titulaire: THOMSON-CSF, 75008 Paris (FR)
(72) Inventeur: ALINAT, Pierre, F-92402 Courbevoie Cédex (FR); GALLAIS, Evelyne, F-92402 Courbevoie Cédex (FR)
(74) Mandataire: Desperrier, Jean-Louis
(86) Numéro de dépôt international: FR9200713
(87) Numéro de publication internationale: WO9302447

(56) Documents cités:
- EP-A- 0 042 590
- Review of the Electrical Communication Laboratories, vol. 32, no. 2, partie 1, 1984, (Tokyo, JP), K. AIKAWA et al.: "Phoneme recognition based on top-down approach", pp 200-211
- 9th International Conference on Pattern Recognition, Rome, 14-17 novembre 1988, vol. II, IEEE, (New York, US), P. DELEGLISE et al.: "Temporal decomposition and acoustic-phonetic decoding for the automatic recognition of continuous speech", pp 839-841
- Speech Technology, vol. 5, no. 3, février/mars 1991, (New York, US), W.S. MEISEL et al.: "Efficient representation of speech for recognition", pp 96-100
- Speech Communication, vol. 10, no. 1, février 1991, Elsevier Science Publishers B.V., (Amsterdam, NL), J.C. JUNQUA: "A two-pass hybrid system using a low dimensional auditory model for speaker-independent isolated-word recognition", pp 33-44
- ICASSP'86 (IEEE-IECEJ-ASJ International Conference on Acoustics, Speech, and Signal Processing, Tokyo, 7-11 avril 1986), vol. 3, IEEE, (New York, US), S. MORIAI et al.: "Phoneme recognition in continuous speech using phoneme discriminant filters", pp 2251-2254

## Description

La présente invention se rapporte à un procédé et à un dispositif de reconnaissance de la parole en temps réel, et notamment de la parole continue.

Les systèmes de reconnaissance connus sont composés d'un analyseur de signal vocal suivi par un système de décision et peuvent être classés selon la complexité des connaissances utilisées dans le système de décision. Cette complexité est directement liée au niveau phonétique auquel sont prises les premières décisions. Si c'est le mot (c'est-à-dire le niveau le plus haut) le système de reconnaissance est dit global. Si ce sont les traits phonétiques (c'est-à-dire le niveau le plus bas) le système de reconnaissance est dit analytique.

Il existe plusieurs méthodes de reconnaissance globales pour lesquelles les premières décisions sont prises au niveau du mot.

La méthode de reconnaissance de mots isolés la plus simple consiste à corréler le spectrogramme du mot prononcé avec des spectrogrammes de référence préalablement mémorisés. C'est une technique de corrélation avec une copie, connue sous l'expression anglaise "template matching". Même en monolocuteur cette méthode présente 2 difficultés : d'une part le problème du choix de la distance servant à estimer le degré de similarité des spectres et d'autre part la grande variabilité, en particulier temporelle, de la parole. Pour ce qui est du premier problème, de nombreuses distances ont été définies et utilisées avec plus ou moins de succès.

Le deuxième problème peut être résolu en partie en utilisant un algorithme connu sous le nom d'algorithme de programmation dynamique qui permet même d'étendre le principe du "template matching" à des mots enchaînés prononcés de façon continue.

Toutefois ces systèmes de reconnaissance globaux sont encore très dépendants du locuteur, c'est-à-dire que chaque nouvel utilisateur doit préalablement prononcer chaque mot un certain nombre de fois. Une telle phase d'apprentissage devient fastidieuse en cas de grand vocabulaire.

Afin d'obtenir une reconnaissance moins dépendante du locuteur et plus performante dans le cas monolocuteur, une description plus statistique des mots fut adoptée : c'est la technique du modèle de Markov caché (HMM) : chaque mot est modélisé par une chaîne de Markov et ce modèle est comparé au signal de parole à reconnaître ayant subi une quantification vectorielle, c'est-à-dire que chaque spectre court terme élémentaire (chaque 10 ms par exemple) est remplacé par le numéro du spectre de référence le plus proche choisi parmi n spectres de référence possibles (par ex. n = 200). Une telle technique permet dans une certaine mesure d'améliorer les performances mais la phase d'apprentissage redevient très longue pour chaque nouveau vocabulaire.

Malgré tout, les deux principaux problèmes concernant les méthodes globales restent plus ou moins d'une part l'existence de la phase d'apprentissage et d'autre part le manque de robustesse aux variations diverses (intra et inter locuteur, bruits d'ambiance, distorsions de transmission) qui ne manquent pas de se produire dans les situations réelles. Les performances des systèmes globaux sont trop différentes de celles des auditeurs humains car les connaissances utilisées par ces systèmes sont insuffisantes : en fait ces systèmes reconnaissent des sons plutôt que de la parole. Un auditeur humain utilise des connaissances considérablement plus étendues, relatives notamment aux niveaux des traits phonétiques et des phonèmes.

Dans les systèmes de reconnaissance analytique, les premières décisions concernent les traits phonétiques et/ou les phonèmes.

Les méthodes analytiques sont quasiment aussi anciennes que les méthodes globales mais du fait de la complexité des connaissances à acquérir et à utiliser et du fait du volume plus important de calculs à mettre en oeuvre (tout au moins pour les petits vocabulaires), l'effort de développement concernant ces méthodes analytiques a été bien inférieur à celui concernant les méthodes globales.

Certains systèmes de reconnaissance analytique prennent directement les décisions élémentaires au niveau des phonèmes sans tenir compte du niveau des traits phonétiques. Le signal vocal est alors segmenté en une série de phonèmes, chacun étant classifié par une méthode de "template matching" ou de quantification vectorielle suivie d'une utilisation du modèle de Markov caché (HMM). Cette première approche a peu d'avenir du fait de l'existence de la coarticulation et des relâchements de prononciations qui entraînent des interactions entre les phonèmes successifs.

Pour contourner ce problème, la reconnaissance analytique peut être effectuée au niveau de diphone, c'est-à-dire, de couple de deux phonèmes successifs. Certains effets de coarticulation sont alors mieux pris en compte, mais le nombre de diphones à prendre en compte est 5 à 10 fois plus élevé que celui des phonèmes et il faut encore augmenter ce nombre pour tenir compte des coarticulations pouvant affecter chaque diphone.

D'autres systèmes de reconnaissance sont totalement analytiques : les décisions élémentaires sont prises au niveau de paramètres acoustiques extraits du signal vocal. Le signal vocal est segmenté selon ces paramètres acoustiques et un phonème est attribué à chaque segment. La reconnaissance des phonèmes est souvent effectuée avec des hésitations. Par exemple, la phrase vocale "le chaton" donnera la suite de phonèmes suivants : 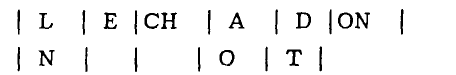 avec des hésitations entre le phonème /L/ et le phonème /N/, ainsi qu'entre /A/ et /O/ et entre /D/ et /T/.

Il y a donc décision sur l'identité des phonèmes reconnus avant comparaison aux mots du vocabulaire. Cette décision peut parfois être pondérée, par exemple /A/ avec une confiance de 0,8 et /O/ avec une confiance de 0,2.

Cette suite de phonèmes reconnus est ensuite comparée à des suites de phonèmes correspondant aux mots de référence mémorisés dans un vocubulaire.

Cette façon de faire induit un inconvénient majeur, à savoir qu'elle ne permet pas de tenir compte des effets de coarticulation entre phonèmes au niveau trait phonétique car, au moment où la décision sur le phonème reconnu est prise, son véritable voisinage phonétique est inconnu.

En résumé, la reconnaissance analytique présente les avantages suivants :
- Indépendance du locuteur : les connaissances utilisées ne sont pas issues de phases d'apprentissage menées par un ou plusieurs locuteurs, mais consistent en statistiques établies une fois pour toute à partir d'un très grand nombre de locuteurs. La reconnaissance analytique est donc robuste vis-à-vis des variations de prononciations intra et inter locuteurs.
- Quasi-indépendance du vocabulaire : les mots sont décrits directement par leur suite de phonèmes. A l'opposé les systèmes globaux nécessitent un apprentissage pour chaque nouveau vocabulaire (même si le locuteur ne change pas).
- Possibilité de traiter de la parole continue naturelle avec en particulier les mots outils : articles, pronoms, prépositions, auxiliaire des verbes, ... Il ne s'agit pas vraiment de mots, mais plutôt de modifications des débuts et des fins de mots et de ce fait il est difficile de les prendre en compte dans les systèmes globaux qui ne prennent de décisions qu'au niveau mot.

La reconnaissance analytique présente également deux inconvénients :
- une part des connaissances utilisées est spécifique à chaque langue. En conséquence pour étendre l'usage d'un système analytique à une autre langue il faut ajuster un certain nombre de règles et de paramètres.
- Pour les petits vocabulaires, les systèmes analytiques demandent des puissances de calcul plus importantes que dans le cas des systèmes globaux, du fait que l'effort pour obtenir la chaîne de phonèmes est indépendant de la taille du vocabulaire .

Des procédés basés sur ces principes sont en particulier décrits dans un article de K. AIKAWA publié dans Review of the Electrical Communication Laboratories, vol. 32, N° 2, partie 1, 1984, et dans un article de W.S. MEISEL publié dans Speech Technology, vol. 5, N° 3, février/mars 1991. Ces procédés sont fondés sur la recherche de phonèmes et sont peu adaptés à la reconnaissance de la parôle continue.

L'invention concerne un procédé et un dispositif de reconnaissance de la parole continue qui présentent les avantages des systèmes de reconnaissance totalement analytiques tel que l'indépendance du locuteur, la quasi-indépendance du vocabulaire, la possibilité de traiter la parole continue naturelle, et qui permettent en outre de tenir compte des effets de coarticulation entre phonèmes et des caractéristiques du bruit et de la transmission de façon souple et efficace.

Pour cela, le procédé consiste à prendre des décisions au niveau des traits phonétiques de phonèmes reconnus, les zones temporelles des phonèmes reconnus pouvant se chevaucher notablement, après avoir comparé ces traits phonétiques reconnus avec une description par traits phonétiques de mots mémorisés dans un dictionnaire. Ces traits phonétiques sont par exemple le voisement, la friction, la position des formants, les maxima d'énergie voisée, l'existence d'explosion, etc... La décision sur le phonème exact prononcé est donc différée jusqu'à ce qu'un mot "hypothèse" soit comparé à la chaîne de traits phonétiques obtenue et cette décision peut être dépendante du mot qui est comparé.

Les mots du dictionnaire, décrits chacun sous forme d'une suite de phonèmes, puis de traits phonétiques sont comparés directement à ces traits phonétiques reconnus en faisant intervenir des règles qui correspondent à la classification des phonèmes, aux coarticulations possibles entre phonèmes, aux liaisons entre mots successifs, aux caractéristiques des bruits d'ambiance et distorsions de transmission telles qu'elles ont pu être estimées.

Selon l'invention le procédé de reconnaissance de la parole continue en temps réel est caractérisé en ce qu'il consiste :
- à effectuer parallèlement une analyse spectrale et une analyse temporelle du signal de parole et à en extraire des paramètres acoustiques caractéristiques du signal de parole,
- à partir des paramètres acoustiques, à rechercher en parallèle des traits phonétiques de détection (traits relatifs à la manière d'articulation) permettant de localiser temporellement des phonèmes possibles, et à attribuer une note d'existence à chaque phonème ainsi détecté et appelé phone,
- pour chaque phone, à rechercher des traits phonétiques de classification permettant de distinguer entre eux les phones appartenant à une même catégorie, les différentes catégories de phonèmes étant définies par des ensembles différents de traits phonétiques de détection,
- à effectuer une comparaison de la chaîne des traits phonétiques reconnus avec des traits phonétiques correspondant à une chaîne de phonèmes caractérisant des mots hypothèses provenant d'un dictionnaire de mots mémorisés, cette comparaison étant effectuée en faisant intervenir des règles de classification des phonèmes, des règles de coarticulation entre phonèmes et des règles de jonction entre mots.
- à prendre une décision sur le mot prononcé en fonction de scores de reconnaissance obtenus lors de la comparaison et à reconstituer par approches successives des phrases prononcées.

L'invention concerne également un dispositif pour la mise en oeuvre du procédé.

D'autres particularités et avantages de l'invention apparaîtront clairement dans la description suivante donnée à titre d'exemple non limitatif et faite en regard des figures annexées qui représentent :
- la figure 1, un organigramme du procédé, selon l'invention,
- la figure 2, un synoptique général du dispositif de reconnaissance de la parole continue, selon l'invention,
- la figure 3, un exemple d'architecture interne de l'analyseur du signal de parole, selon l'invention,
- les figures 4a et 4b, deux exemples de spectres obtenus à un instant donné après une analyse spectrale du signal de parole et correspondant respectivement aux phonèmes /A/ et /E/,
- la figure 5, un exemple d'architecture interne des moyens de détermination des traits phonétiques de détection, selon l'invention.

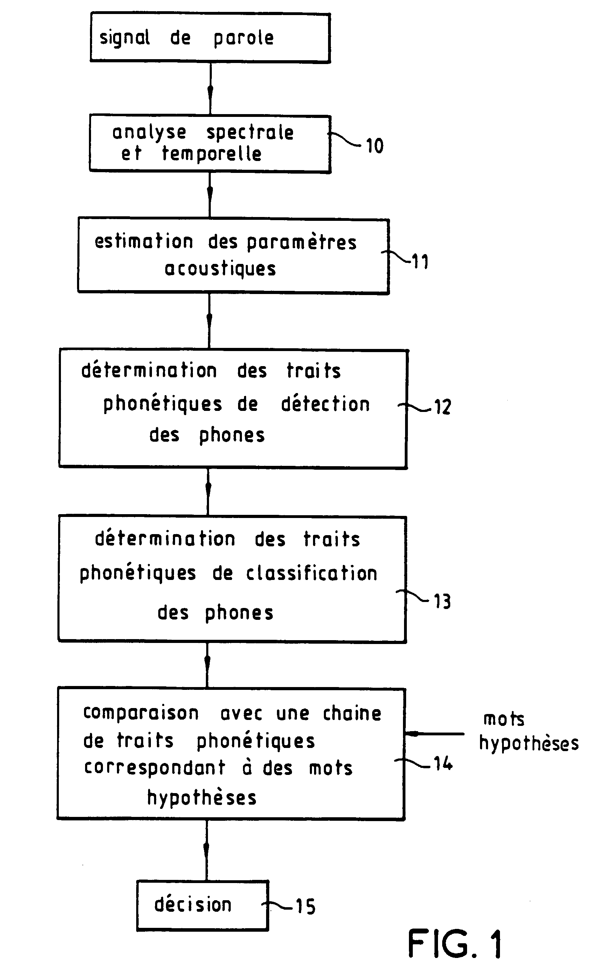

Conformément à la figure 1, le procédé consiste dans une première étape 10 à effectuer une analyse spectrale et temporelle du signal de parole ; dans une étape 11, à estimer les paramètres acoustiques du signal de parole ; dans une étape 12, à déterminer les traits phonétiques de détection (traits relatifs à la manière d'articulation) des phones ; dans une étape 13, à déterminer les traits phonétiques de classification des phones ; dans une étape 14, à comparer la chaîne des traits phonétiques reconnus avec une chaîne de traits phonétiques correspondant à des mots hypothèses et à attribuer 2 scores de reconnaissance à chaque mot hypothèse présenté (l'un positif, l'autre négatif), dans une étape 15, à prendre une décision sur le mot prononcé.

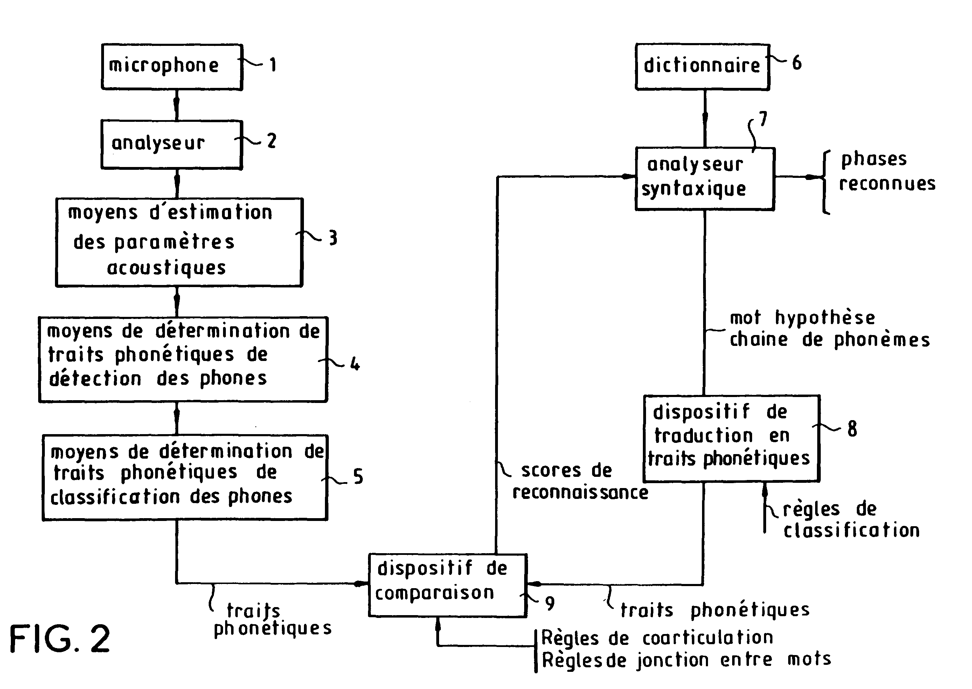

Conformément à la figure 2, le dispositif comporte, d'une part, en série, un microphone, 1, pour capter un signal de parole, un analyseur du signal de parole 2 constitué par une cochlée artificielle, des moyens d'estimation de paramètres acoustiques, 3, des moyens 4 de détermination de traits phonétiques permettant de détecter des phones et des moyens 5 de détermination de traits phonétiques permettant de classifier les phones détectés. Les phones sont les phonèmes que l'on croit reconnaître .

D'autre part, le dispositif comporte un dictionnaire 6 contenant une liste de mots préalablement enregistrés et mémorisés, un analyseur syntaxique 7 connecté au dictionnaire de mots mémorisés, un dispositif 8 de traduction des mots du dictionnaire en traits phonétiques, cette traduction étant effectuée en faisant intervenir des règles de définition et de classification de phonèmes, et un dispositif de comparaison 9.

Le dispositif de comparaison compare la chaîne des traits phonétiques reconnus par les moyens de détermination 4, 5 des traits phonétiques avec les traits phonétiques correspondant à la description phonémique de mots hypothèses issus du dictionnaire et proposés par l'analyseur syntaxique. Cette comparaison est effectuée en faisant intervenir des règles de coarticulation entre phonèmes adjacents et des règles de jonction entre mots. Cette comparaison fournit des scores de reconnaissance qui sont transmis en retour à l'analyseur syntaxique pour guider les choix de mots ultérieurs dans le dictionnaire et proposer ces nouveaux mots hypothèses au dispositif de comparaison et ainsi de suite jusqu'à ce que les scores obtenus permettent, à l'analyseur syntaxique, de prendre une décision sur le mot prononcé et reconstituer ainsi par approches successives les phrases prononcées.

Une partie des connaissances utilisées lors de la reconnaissance analytique est spécifique à chaque langue bien que le principe général n'en dépende pas. En conséquence, pour étendre l'usage d'un système analytique à une autre langue il faut ajuster un certain nombre de règles et de paramètres. La suite de la description est limitée au cas de la langue française.

La fonction de l'analyseur 2 consiste à mettre le signal de parole sous une forme permettant de découvrir et d'utiliser les traits phonétiques sans perdre d'information utile à la reconnaissance de ce signal de parole. Les principaux types d'analyseurs possibles effectuent, soit une analyse par transformée de Fourier court terme (DFT) ou une analyse par codage linéaire prédictif (LPC), ou utilisent des bancs de filtres passe-bande, ou calculent le Cepstre du signal de parole. Les méthodes utilisant une analyse par transformée de Fourier court terme (DFT) ou une analyse par codage linéaire prédictif (LPC) suivie d'une intégration respectant les bandes de fréquences critiques du signal vocal, ne prennent pas en compte l'aspect temporel (c'est-à-dire les phases) des réponses impulsionnelles et ne sont valables que pour les sons stationnaires.

Une meilleure méthode consiste à utiliser un banc de filtres passe-bande dont les fréquences centrales et les réponses impulsionnelles en amplitude et en phase sont déduites de la cochlée humaine.

Par exemple les filtres seront choisis tels que leurs fréquences centrales s'étagent de 70 Hz à 10000 Hz selon une échelle dite de Bark, et un coefficient de surtension Δf/f variant peu avec la fréquence centrale (Δf/f est de l'ordre de 0,15).

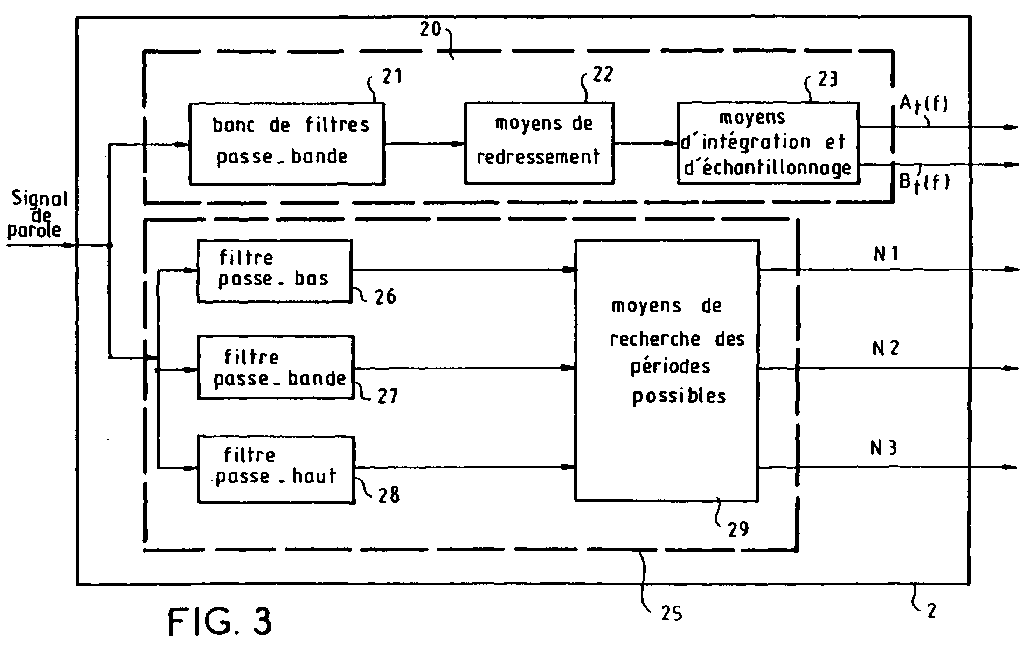

Conformément à la figure 3, l'analyseur choisi se décompose en deux parties disposées en parallèle.

Une première partie 20 réalise l'analyse spectrale du signal de parole et comporte, en série, un banc de filtres passe-bande 21 dont les fréquences centrales et les sélectivités sont déduites de la cochlée humaine, des moyens 22 de redressement double alternance et des moyens d'intégration 23 de façon à ne garder que l'enveloppe du signal de parole et à éliminer sa phase qui n'apporte pas d'information utile. Les moyens d'intégration réalisent, parallèlement, deux intégrations du signal au même instant t avec deux constantes de temps différentes. La première intégration est réalisée avec une constante de temps comprise entre 10 ms et 20 ms et la deuxième intégration est réalisée avec une constante de temps inférieure à 8 ms. A l'issue de ces deux intégrations, deux signaux, respectivement noté Aₜ (f) et Bₜ (f) sont obtenus (f représentant la fréquence) ; ces deux signaux représentent les "spectres", à l'instant t, du signal de parole obtenus avec l'analyseur et les constantes de temps choisis. Le signal de parole est échantillonné à des instants suffisamment rapprochés en comparaison avec la durée d'un phonème de façon à recueillir toute l'information nécessaire à sa reconnaissance. La durée d'un phonème étant de l'ordre de 50 ms, la cadence d'échantillonnage, par exemple, peut être choisie égale à 8 ms pour le signal A (f) et à 2 ms pour le signal B (f).

Ces deux signaux Aₜ (f) et Bₜ (f) obtenus parallèlement après deux intégrations réalisées au même instant avec deux constantes de temps différentes, permettent d'obtenir des informations complémentaires sur le signal de parole.

Le signal Aₜ (f) obtenu après une intégration avec une constante de temps comprise entre 10 ms et 20 ms, permet d'obtenir un grand nombre d'informations sur le signal de parole, mais ne permet pas traiter convenablement les consonnes plosives.

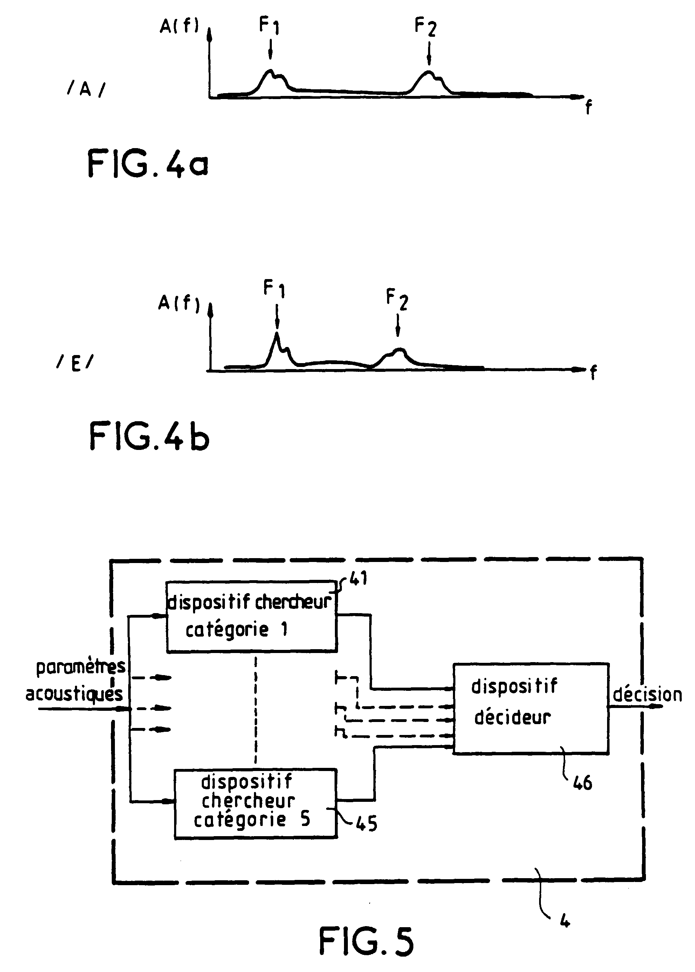

Le signal Aₜ (f) permet aussi de déterminer les formants de la parole. Les formants de la parole sont les fréquences qui correspondent aux principaux pics du signal Aₜ (f), c'est-à-dire, approximativement aux premiers pôles de la fonction de transfert des cavités laryngo-bucco-nasales. Par convention, les formants sont notés F1, F2, ..., le formant F1 correspondant à la fréquence la plus basse. Les figures 4a et 4b représentent deux exemples de deux signaux A (f) obtenus à un instant donné, ces deux signaux correspondant respectivement aux spectres relatifs aux phonèmes /A/ et /E/. Seuls les deux premiers formants F1 et F2 sont représentés.

Le signal Bₜ (f) obtenu après une intégration avec une constante de temps inférieure ou égale à 8 ms permet d'obtenir des informations plus utiles pour les consonnes plosives et permet en particulier de mieux distinguer les classes de consonnes plosives ; les consonnes plosives étant classifiées suivant leur place d'articulation, et cette place d'articulation étant liée à leur point d'occlusion dans le conduit vocal ;

Parallèlement à l'analyse spectrale, une deuxième partie 25 de l'analyseur réalise une analyse temporelle du signal de parole. Le but de cette analyse temporelle est de fournir des informations permettant de détecter les portions voisées de la parole, appelé encore le voisement, c'est-à-dire les instants où les cordes vocales vibrent. La détection du voisement permet de décider qu'il y a un signal de parole qui a été prononcé et de connaître la fréquence de vibration des cordes vocales, appelée fréquence fondamentale. Etant donné que les portions voisées de la parole se distinguent des autres portions et du bruit, par le fait qu'elles sont périodiques, l'analyse temporelle consiste à rechercher les périodicités du signal de parole. Pour cela, le signal de parole est décomposé en un certain nombre de signaux issus de bandes de fréquences différentes. A titre d'exemple, le signal de parole est décomposé en trois signaux issus de trois bandes de fréquences différentes au moyen de trois filtres différents ; par exemple un filtre passe-bas 26 ayant une fréquence de coupure à 600 Hz, un filtre passe-bande 27 laissant passer les fréquences comprises entre 400 Hz et 1 200 Hz, et un filtre passe-haut 28 ayant une fréquence de coupure égale à 1 100 Hz. Dans chaque bande de fréquences, l'analyseur recherche, à partir des maxima des trois signaux dans le temps, des périodes possibles N1, N2, N3 de la fréquence fondamentale de la parole ; cette recherche est effectuée par des moyens 29.

Les signaux Aₜ (f) et Bₜ (f) et les informations N1, N2, N3 sont ensuite utilisés pour estimer un certain nombre de paramètres acoustiques, tels que :
- l'énergie totale du signal de parole,
- la valeur de la fréquence fondamentale du signal de parole lorsque le degré de voisement est suffisant,
- le degré de friction dans le signal d'excitation respectivement pour les bandes de fréquences 500 à 1 100 Hz et 1 100 à 5 000 Hz,
- l'existence d'explosion, c'est-à-dire d'une variation suffisante et rapide de l'énergie ou de la pente de l'énergie,
- l'existence d'une montée rapide de l'énergie dans la bande de fréquence 200 - 1 000 Hz,
- la position et l'amplitude des pics du signal Aₜ (f) pouvant éventuellement correspondre aux formants F1 et/ou F2 pour les voyelles et au formant noté FH pour les consonnes fricatives,
- la largeur des pics correspondant au formant FH,
- la position, l'amplitude et la largeur des pics du signal Bₜ (f) pour définir la forme d'une éventuelle impulsion de bruit large bande ('burst' en anglais) pour les consonnes plosives,
- la répartition de l'énergie, c'est-à-dire le pourcentage d'énergie du signal qui se trouve dans les bandes de fréquences 200 à 600 Hz, 500 à 1 100 Hz, et 1 100 à 10 000Hz.

Ces paramètres acoustiques étant déterminés, ils sont alors utilisés pour estimer les traits phonétiques utiles pour la détection des phones, en appelant phones, les phonèmes que l'on croit reconnaître.

La figure 5 représente un exemple d'architecture interne des moyens de détermination des traits phonétiques de détection.

Les phones, ou les phonèmes, peuvent être classés en différentes catégories, chaque catégorie étant associée un ensemble différent de traits de détection.

Les différentes catégories de phones, ou de phonèmes, considérées sont au nombre de cinq. Il s'agit des voyelles, des semi-voyelles, des consonnes fricatives, des consonnes plosives et de la consonne R non fricative dite de type "liquide".

Les voyelles sont caractérisées par un maximum d'énergie voisée ou par une stabilité des fréquences des formants en fonction du temps.

Les semi-voyelles sont caractérisées par une énergie non maximum, par la présence d'un voisement, et par un glissement en fréquence des formants.

Les consonnes fricatives sont caractérisées par un maximum de pourcentage d'énergie non voisée par rapport à l'énergie totale.

Les consonnes plosives sont caractérisées par l'existence d'explosion, l'existence d'une impulsion de bruit large barge ('burst'), l'existence d'une forme particulière du spectre pendant une phase stationnaire appelée phase de fermeture. Cette phase de fermeture est caractérisée par la présence de pics plus ou moins étroits qu'on ne peut pas distinguer entre eux. La forme du spectre est variable et dépend du type de consonne plosive considéré. Dans le cas d'une consonne plosive sourde la fermeture est totale car les cordes vocales ne vibrent pas. Dans le cas d'une consonne plosive voisée les cordes vocales bougent et le spectre contient les premiers harmoniques de la fréquence fondamentale. Dans le cas d'une consonne plosive nasale les cordes vocales bougent, la fermeture n'est plus totale et le spectre contient des pics supplémentaires différents des pics correspondant aux consonnes plosives voisées.

La consonne R non fricative est caractérisée par une évolution spécifique des formants.

La recherche des traits phonétiques de détection est effectuée par catégorie de phonèmes, en émettant des hypothèses sur la présence d'une catégorie donnée de phonèmes à un instant donné, en recherchant les frontières d'existence temporelle de chaque hypothèse de phonème, en attribuant une note d'existence à chaque hypothèse de phonème, appelée phone, et en retenant les hypothèses les plus vraisemblables en tenant compte de leur note d'existence et des contradictions possibles entre deux phones adjacents.

Les traits phonétiques de détection sont recherchés en parallèle au moyen de dispositifs chercheurs 41 à 45 connectés en parallèle. Il y a autant de dispositifs chercheurs que de catégories de phonèmes, chaque dispositif chercheur étant dédié à la recherche de traits phonétiques caractéristiques d'une catégorie donnée de phonèmes. Dans le cas présent, cinq catégories de phonèmes sont distinguées et cinq dispositifs chercheurs sont utilisés. Pour rechercher les traits phonétiques caractéristiques de la catégorie pour laquelle ils sont spécialisés, les dispositifs chercheurs ouvrent une fenêtre temporelle de largeur égale à la durée moyenne d'un phonème et la déplacent dans le temps pendant toute la durée du signal de parole. Pour une fenêtre temporelle donnée, ils observent, à l'intérieur de cette fenêtre, l'évolution, dans le temps, des différents paramètres acoustiques, cherchent à reconnaître des traits phonétiques et leur attribuent une note sous forme de coefficients de confiance. Les frontières d'existence temporelle des phones sont obtenues approximativement en recherchant l'apparition, ou la disparition de certains traits phonétiques et une note d'existence est attribuée à chaque phone.

Toutes les hypothèses émises par les dispositifs chercheurs sont alors transmises vers un dispositif décideur 46, qui retient, pour chaque fenêtre temporelle, les hypothèses les plus vraisemblables en tenant compte des notes d'existence attribuées par chacun des dispositifs chercheurs aux phones correspondants et en tenant compte des contradictions possibles entre deux phones adjacents. Les phones qui ont une note d'existence trop faible sont abandonnés. Dans le cas où il y a hésitation entre deux catégories de phone, les deux possibilités sont conservées en parallèle. Les zones temporelles attribuées à deux phones successifs peuvent se chevaucher de façon notable. Ces zones temporelles sont définies par l'intervalle de temps situé entre les frontières d'existence temporelle des phones.

A ce stade de détection un phone peut fort bien correspondre en fait à deux phonèmes adjacents tel que par exemple deux consonnes fricatives ou bien une consonne plosive suivie d'une consonne fricative.

Lorsque les phones sont détectés, l'étape suivante consiste à rechercher des traits phonétiques de classification des phones. Ces traits phonétiques de classification sont les traits phonétiques qui permettent, par exemple, de distinguer une voyelle d'une autre voyelle ou une semi-voyelle d'une autre semi-voyelle, et ainsi de suite pour chaque catégorie de phones.

Cette étape consiste donc à rechercher des traits phonétiques plus ou moins spécifiques à chaque catégorie de phones. Notamment, à titre d'exemple, pour chaque catégorie on pourra considérer la force du phone c'est-à-dire son amplitude, sa durée et sa note d'existence. Un autre trait phonétique qui peut être considéré est la valeur de la fréquence fondamentale du spectre.

Pour une voyelle, on peut considérer son degré de nasalisation, ainsi que la position et l'évolution des formants F1 et F2.

Pour une semi-voyelle, on peut considérer la position des extrémités des glissements des formants F1 et F2.

Pour une consonne fricative, on peut déterminer la présence ou l'absence de voisement, la position et l'évolution du formant, et la forme du spectre.

Pour une consonne plosive, on peut déterminer la présence ou l'absence de voisement, la forme du spectre de l'impulsion de bruit large bande, et la forme du spectre pendant la phase de fermeture.

Les traits phonétiques de classification sont regroupés en fonction des traits phonétiques de détection.

Tous les traits phonétiques de détection et de classification des phones énumérés ci-dessus sont donnés à titre d'exemple non limitatif. Il est possible de supprimer certains de ces traits phonétiques ou d'en rajouter d'autres sans sortir du cadre de l'invention.

Enfin la dernière étape consiste à effectuer la comparaison de la chaîne des traits phonétiques reconnus avec des traits phonétiques correspondant à une chaîne de phonèmes caractérisant des mots hypothèses provenant du dictionnaire de mots mémorisés.

Pour cela, chaque mot du dictionnaire est décrit par la suite de ses phonèmes, chaque phonème étant caractérisé par son nom, par exemple /A/, /S/... etc, et des indications sur son degré d'accentuation des syllabes.

L'analyseur syntaxique propose des mots hypothèse un par un au dispositif de comparaison. La comparaison entre une chaîne de phonèmes (décrivant un mot vocabulaire) et la chaîne de traits phonétiques (fournie par le système de reconnaissance) est faite par programmation dynamique. Les comparaisons élémentaires entre les traits phonétiques des phones et les traits phonétiques d'un phonème correspondant à un mot du dictionnaire prennent en compte l'identité et l'environnement du phonème d'une part, la catégorie et la valeur des traits phonétiques définissant le phone d'autre part. La comparaison prend également en compte les caractéristiques du bruit d'ambiance et du milieu de transmission. Le score de reconnaissance dépend alors de 4 sortes de connaissances :
- les règles de classification qui définissent les traits phonétiques caractérisant chaque phonème des mots du vocabulaire ; par exemple, une voyelle est classée d'après la position de ses 2 formants (F1, F2) et son degré de nasalisation. De plus la force de chaque phone doit être en harmonie avec l'accentuation de la syllabe,
- les règles de coarticulation entre phonèmes ; ces règles prévoient les modifications que peuvent subir les traits phonétiques selon les phonèmes adjacents et le degré d'accentuation. Par exemple, si une voyelle est adjacente aux consonnes /s/ ou /z/ alors le formant F2 de cette voyelle peut être plus élevé que la normale. D'autres règles prévoient la possibilité que 2 phonèmes successifs ne soient prononcés que comme un seul phonème. Le nombre des règles de coarticulation est plus ou moins important selon le degré de perfectionnement désiré,
- les règles de jonction entre mots ; par exemple, si un mot se termine par une voyelle et le mot suivant commence par une voyelle, ces 2 voyelles peuvent être prononcées fusionnées en une diphtongue de durée supérieure à la normale,
- les règles d'intervention du bruit d'ambiance et de la transmission sur les scores de reconnaissance.

Grâce à cet ensemble de connaissances, 2 scores, l'un positif, l'autre négatif, sont attribués à chaque mot du dictionnaire proposé comme hypothèse par l'analyseur syntaxique.

Les scores positifs et négatifs sont attribués en fonction de toutes les connaissances qui penchent en faveur du mot considéré, ou respectivement, contre le mot considéré.

Ces scores sont transmis en retour à l'analyseur syntaxique pour guider les choix de mots ultérieurs dans le dictionnaire et proposer ces nouveaux mots au dispositif de comparaison. Lorsque les scores sont obtenus pour chaque mot proposé, l'analyseur syntaxique prend une décision sur le mot prononcé en choisissant les mots ayant les meilleurs scores et reconstitue par approches successives la phrase prononcée.

## Revendications

1. Procédé de reconnaissance de la parole dans lequel on effectue parallèlement une analyse spectrale et une analyse temporelle (2) du signal de parole et on extrait des paramètres acoustiques (3) caractéristiques du signal de parole, caractérisé en ce que :
- à partir des paramètres acoustiques, on recherche (4) en parallèle des traits phonétiques de détection permettant de localiser temporellement des hypothèses de phonèmes possibles, appelés phones et on attribue une note d'existence à chaque phone ainsi détecté,
- pour chaque phone, on recherche (5) des traits phonétiques de classification permettant de distinguer entre eux les phones appartenant à une même catégorie, les différentes catégories de phonèmes étant définies par des ensembles différents de traits phonétiques de détection,
- on effectue une comparaison (9) de la chaîne des traits phonétiques reconnus avec des traits phonétiques correspondant à des mots hypothèses provenant d'un dictionnaire de mots mémorisés, cette comparaison étant effectuée en faisant intervenir des règles prévoyant la modification des traits phonétiques en fonction de leur environnement et des règles de jonction entre mots.
- on prend (7) une décision sur le mot prononcé en fonction de scores de reconnaissance obtenus lors de la comparaison : on reconstitue ainsi par approches successives les phrases prononcées.

2. Procédé selon la revendication 1, caractérisé en ce que la recherche des traits phonétiques de détection est effectuée par catégorie de phone, en émettant des hypothèses sur la présence d'une catégorie donnée de phone à un instant donné, en recherchant les frontières d'existence temporelle de chaque phone, en attribuant une note d'existence à chaque phone, et en retenant les hypothèses les plus vraisemblables en tenant compte de leur note d'existence et des contradictions possibles entre deux phones adjacents.

3. Procédé selon la revendication 2, caractérisé en ce que, les frontières d'existence temporelle des phones définissant des zones temporelles, les zones temporelles attribuées à deux phones successifs peuvent se chevaucher.

4. Procédé selon la revendication 2, caractérisé en ce que la comparaison entre les traits phonétiques correspondant à un phone donné et les traits phonétiques correspondant à un phonème d'un mot du dictionnaire prend en compte, d'une part, l'environnement du phonème grâce aux règles de prévoyance et de jonction et, d'autre part, la valeur des traits phonétiques définissant le phone.

5. Procédé selon la revendication 4, caractérisé en ce que la comparaison des traits phonétiques prend également en compte des caractéristiques relatives à du bruit d'ambiance et à des distorsions de transmission.

6. Dispositif de reconnaissance de la parole continue en temps réel pour la mise en oeuvre du procédé selon la revendication 5, caractérisé en ce qu'il comporte en série un microphone (1) pour capter le signal de parole, un analyseur (2) du signal de parole constitué par une cochlée artificielle, des moyens (3) d'estimation de paramètres acoustiques, des moyens (4) de détermination de traits phonétiques de détection permettant de détecter des phones, des moyens (5) de détermination de traits phonétiques de classification permettant de classifier les phones détectés, un dispositif de comparaison (9), et en ce qu'il comporte en outre un dictionnaire (6) de mots préalablement mémorisés, un analyseur syntaxique (7) connecté d'une part au dictionnaire de mots mémorisés et, d'autre part, au dispositif de comparaison (9) par l'intermédiaire d'un dispositif (8) de traduction en traits phonétiques, le dispositif de comparaison étant destiné à comparer les traits phonétiques de détection et de classification des phones estimés à partir du signal de parole, avec les traits phonétiques correspondant à la description phonémique de mots hypothèses proposés par l'analyseur syntaxique et à fournir des scores de reconnaissance (l'un positif, l'autre négatif), en retour à l'analyseur syntaxique qui prend ensuite une décision sur le mot prononcé et reconstitue par approches successives le signal de parole.

7. Dispositif selon la revendication 6, caractérisé en ce que l'analyseur (2) du signal de parole comprend des moyens d'analyse spectrale dans lesquels des moyens d'intégration réalisent parallèlement deux intégrations du signal au même instant t avec deux constantes de temps différentes.

8. Dispositif selon la revendication 7, caractérisé en ce que les moyens (4) de détermination des traits phonétiques de détection comportent :
- des dispositifs chercheurs (41 à 45) connectés en parallèle et en nombre égal au nombre de catégories de phonèmes considérées, chaque dispositif chercheur étant dédié à la recherche des traits phonétiques de détection caractéristiques d'une catégorie donnée de phonèmes, émettant des hypothèses sur la présence de cette catégorie de phonèmes à un instant donné, recherchant les frontières d'existence temporelle de chaque hypothèse de phonème appelée phone, et attribuant une note d'existence à chaque phone,
- un dispositif décideur (46) connecté en sortie des dispositifs chercheurs (41 à 45), recevant en entrée toutes les hypothèses émises par les dispositifs chercheurs et retenant les hypothèses les plus vraisemblables en tenant compte des notes d'existence attribuées par chaque dispositif chercheur, aux phones correspondants et en tenant compte des contradictions possibles entre deux phones adjacents.

## Patentansprüche

1. Verfahren zur Spracherkennung, bei dem parallel eine spektrale und eine zeitliche Analyse (2) des Sprachsignals erfolgt und für das Sprachsignal charakteristische akustische Parameter ermittelt werden (3), dadurch gekennzeichnet, daß
- ausgehend von den akustischen Parametern parallel phonetische Erfassungsmerkmale gesucht werden (4), die zeitlich hypothetisch mögliche Phoneme zu lokalisieren erlauben, die Phone genannt werden, wobei jedem so erfaßten Phon eine Existenznote zugewiesen wird,
- für jedes Phon phonetische Klassifizierungsmerkmale gesucht werden (5), die die einer gleichen Kategorie angehörenden Phone voneinander zu unterscheiden erlauben, wobei die verschiedenen Kategorien von Phonemen durch unterschiedliche Gruppen von phonetischen Erfassungsmerkmalen definiert sind,
- ein Vergleich (9) der Kette der erkannten phonetischen Merkmale mit phonetischen Merkmalen entsprechend hypothetischen Wörtern durchgeführt wird, die von einem Wörterbuch mit gespeicherten Wörtern stammen, wobei dieser Vergleich erfolgt, indem Regeln eingesetzt werden, die die Veränderung der phonetischen Merkmale abhängig von ihrem Umfeld und den Verbindungsregeln zwischen Wörtern vorsehen,
- eine Entscheidung über das gesprochene Wort abhängig von Bewertungen der Erkenntnisse getroffen wird (7), die beim Vergleich erhalten wurde, so daß durch aufeinanderfolgende Näherungen die gesprochenen Sätze wiedergebildet werden.

2. Verfahren nach Anspruch 1, dadurch gekennzeichnet, daß die Suche nach phonetischen Merkmalen der Erfassung nach der Kategorie der Phone durch Ausgabe von Hypothesen über das Vorliegen einer bestimmten Phonkategorie in einem bestimmten Augenblick, durch Suchen der zeitlichen Grenzen der Existenz jedes Phons, durch Zuordnung einer Existenznote zu jedem Phon und durch Beibehaltung der Hypothesen mit der höchsten Wahrscheinlichkeit unter Berücksichtigung ihrer Existenznote und der möglichen Widersprüche zwischen zwei benachbarten Phonen erfolgt.

3. Verfahren nach Anspruch 2, dadurch gekennzeichnet, daß die Grenzen der zeitlichen Existenz der Phone Zeitzonen definieren und daß Zeitzonen, die zwei aufeinanderfolgenden Phonen zugewiesen sind, sich überlappen können.

4. Verfahren nach Anspruch 2, dadurch gekennzeichnet, daß der Vergleich zwischen den phonetischen Merkmalen entsprechend einem bestimmten Phon und den phonetischen Merkmalen entsprechend einem Phonem eines Worts aus dem Wörterbuch einerseits das Umfeld des Phonems aufgrund von Vorhersage- und Verbindungsregeln und andererseits den Wert der das Phon definierenden phonetischen Merkmale berücksichtigt.

5. Verfahren nach Anspruch 4, dadurch gekennzeichnet, daß der Vergleich der phonetischen Merkmale auch Merkmale berücksichtigt, die sich auf das Rauschen in der Umgebung und auf Übertragungsverzerrungen beziehen.

6. Vorrichtung zur Erkennung der kontinuierlichen Sprache in Echtzeit zur Durchführung des Verfahrens nach Anspruch 5, dadurch gekennzeichnet, daß sie in Reihe ein Mikrophon (1) zur Aufnahme des Sprachsignals, einen Analysator (2) in Form einer künstlichen Ohrschnecke zur Analyse des Sprachsignals, Mittel (3) zum Abschätzen akustischer Parameter, Mittel (4) zur Bestimmung von phonetischen Merkmalen der Erfassung, mit denen Phone erfaßt werden können, Mittel (5) zur Bestimmung von phonetischen Klassifizierungsmerkmalen, die eine Klassifizierung der erfaßten Phone erlauben, und eine Vergleichsvorrichtung (9) enthält, und daß weiter ein Wörterbuch (6) mit vorher gespeicherten Wörtern und ein Syntaxanalysator (7) vorgesehen sind, der einerseits an das Wörterbuch der gespeicherten Wörter und andererseits an die Vergleichsvorrichtung (9) über eine Übersetzungsvorrichtung (8) in phonetische Merkmale angeschlossen ist, wobei die Vergleichsvorrichtung die phonetischen Merkmale der Erfassung und der Klassifizierung der ausgehend vom Sprachsignal abgeschätzten Phone mit phonetischen Merkmalen vergleichen soll, die der phonemischen Beschreibung von vom Syntaxanalysator vorgeschlagenen hypothetischen Wörtern entsprechen, und eine positive und eine negative Erkennungsbewertung an den Syntaxanalysator liefern soll, der dann die Entscheidung über das gesprochene Wort trifft und durch aufeinanderfolgende Näherungen das Sprachsignal wiederherstellt.

7. Vorrichtung nach Anspruch 6, dadurch gekennzeichnet, daß der Analysator (2) für das Sprachsignal Mittel zur Spektralanalyse enthält, in denen Integriermittel parallel zwei Integrationen des Signals zum selben Zeitpunkt t mit zwei unterschiedlichen Zeitkonstanten durchführen.

8. Vorrichtung nach Anspruch 7, dadurch gekennzeichnet, daß die Mittel (4) zur Bestimmung der phonetischen Erfassungsmerkmale enthalten:
- Suchvorrichtungen (41 bis 45), die parallelgeschaltet sind und deren Zahl der Anzahl der betrachteten Kategorien von Phonemen entspricht, wobei jede Suchvorrichtung der Suche nach phonetischen Erfassungsmerkmalen gewidmet ist, die für eine bestimmte Kategorie von Phonemen charakteristisch sind, und Hypothesen über das Vorliegen dieser Kategorie von Phonemen in einem bestimmten Augenblick liefert sowie die Grenzen über die zeitliche Existenz jeder Hypothese eines Phonems, Phon genannt, sucht und jedem Phon eine Existenznote zuweist,
- eine Entscheidungsvorrichtung (46), die an den Ausgang der Suchvorrichtungen (41 bis 45) angeschlossen ist und eingangsseitig alle von den Suchvorrichtungen ausgegebenen Hypothesen empfängt sowie die Hypothesen mit der höchsten Wahrscheinlichkeit unter Berücksichtigung der durch jede Suchvorrichtung den entsprechenden Phonen zugewiesenen Existenznoten und unter Berücksichtigung der möglichen Widersprüche zwischen zwei benachbarten Phonen beibehält.

## Claims

1. Speech recognition method, in which a spectral analysis and a time-based analysis (2) of the speech signal are carried out in parallel, and acoustic parameters (3) characteristic of the speech signal are extracted, characterized in that:
- from the acoustic parameters, phonetic detection traits are sought (4) in parallel, making it possible to locate possible phoneme hypotheses, called phons, in time, and an existence annotation is attributed to each phon thus detected,
- for each phon, phonetic classification traits are sought (5), making it possible to distinguish between phons belonging to the same category, the various categories of phonemes being defined by different sets of phonetic detection traits,
- a comparison (9) is carried out of the chain of phonetic traits recognized with phonetic traits corresponding to hypothesis words originating from a dictionary of memory-stored words, this comparison being carried out by invoking rules predicting the modification of the phonetic traits depending on their environment and rules of joining between words,
- a decision is taken (7) on the word pronounced depending on recognition scores obtained during the comparison, and the phrases pronounced are thus reconstituted by successive approximations.

2. Method according to Claim 1, characterized in that the search for phonetic detection traits is carried out per category of phon, by issuing hypotheses on the presence of a given category of phon at a given instant, by searching for the time-based existence boundaries of each phon, by attributing an existence annotation to each phon, and by adopting the most probable hypotheses, having regard to their existence anntation and possible contradictions between two adjacent phons.

3. Method according to Claim 2, characterized in that, as the time-based existence boundaries of the phons define time-based regions, the time-based regions attributed to two successive phons may overlap.

4. Method according to Claim 2, characterized in that the comparison between the phonetic traits corresponding to a given phon and the phonetic traits corresponding to a phoneme of a word from the dictionary takes account, on the one hand, of the environment of the phoneme by virtue of the coarticulation and joining rules and, on the other hand, the value of the phonetic traits defining the phon.

5. Method according to Claim 4, characterized in that the comparison of the phonetic traits also takes account of the characteristics relating to ambient noise and to transmission distortions.

6. Real-time, continuous-speech recognition device for implementing the method according to Claim 5, characterized in that it includes, in series, a microphone (1) for picking up the speech signal, a speech signal analyser (2) consisting of an artificial cochlear, acoustic parameter estimation means (3) phonetic detection trait determination means (4) making it possible to detect phons, phonetic classification trait determination means (5) making it possible to classify the detected phons, a comparison device (9), and in that it further includes a dictionary (6) of words previously stored in memory, a syntatic analyser (7) connected, on the one hand, to the dictionary of memory-stored words and, on the other hand, to the comparison device (9) by way of a device (8) for translation into phonetic traits, the comparison device being intended to compare the phonetic detection and classification traits of the phons estimated from the speech signal, with the phonetic traits corresponding to the phonemic description of hypothesis words proposed by the syntatic analyser, and to supply recognition scores (one positive, the other negative), back to the syntatic analyser, which then takes a decision on the word pronounced, and reconstitutes the speech signal by successive approximations.

7. Device according to Claim 6, characterized in that the speech signal analyser (2) comprises spectral analysis means in which integration means carry out, in parallel, two integrations of the signal at the same instant t with two different time constants.

8. Device according to Claim 7, characterized in that the phonetic detection trait determination means (4) include:
- seeker devices (41 to 45) connected in parallel, and equal in number to the number of categories of phonemes in question, each seeker device being dedicated to searching for phonetic detection traits characteristic of a given category of phonemes, sending out hypotheses on the presence of this category of phonemes at a given instant, searching for the time-based existence boundaries of each phoneme hypothesis, called phon, and attributing an existence annotation to each phon,
- a decider device (46) connected at the output of the seeker devices (41 to 45), receiving, at the input, all the hypotheses sent out by the seeker devices and adopting the most probable hypotheses, taking account of the existence annotations attributed by each seeker device, to the corresponding phons, and taking account of possible contradictions between two adjacent phons.
